# EUROPEAN PATENT SPECIFICATION

(11) **EP 4 344 814 B1**
(45) Date of publication and mention of the grant of the patent: **03.06.2026**
(21) Application number: 23190447.5
(22) Date of filing: 09.08.2023
(51) Int. Cl.: B23K 26/0622, B23K 26/352, B29C 45/14, B29C 65/00, B23K 26/354, B23K 26/00, B29C 37/00

(54) **PROCESS FOR SURFACE STRUCTURING OF A METAL WORKPIECE AND PROCESS FOR PRODUCING A HYBRID PRODUCT FROM A METAL WORKPIECE AND A POLYMER MATERIAL**
VERFAHREN ZUR OBERFLÄCHENSTRUKTURIERUNG EINES METALLISCHEN WERKSTÜCKS UND VERFAHREN ZUR HERSTELLUNG EINES HYBRIDPRODUKTS AUS EINEM METALLISCHEN WERKSTÜCK UND EINEM POLYMERMATERIAL
PROCÉDÉ DE STRUCTURATION DE SURFACE D'UNE PIÈCE MÉTALLIQUE ET PROCÉDÉ DE PRODUCTION D'UN PRODUIT HYBRIDE À PARTIR D'UNE PIÈCE MÉTALLIQUE ET D'UN MATÉRIAU POLYMÈRE

(30) Priority: 05.09.2022 SI 202200169
(43) Date of publication of application: 03.04.2024
(73) Proprietor: ISKRA ISD d.o.o., 4000 Kranj (SI)
(72) Inventor: Bertoncelj, Luka, 4000 Kranj (SI); Jezersek, Matija, 1235 Radomlje (SI); Kocevar, Rok, 1241 Kamnik (SI); Kravanja, Gaia, 6330 Piran (SI); Hribar, Luka, 1420 Trbovlje (SI)
(74) Representative: Sveticic, Andrej

(56) References cited:
- EP-B1- 3 498 416
- WO-A1-2009/151099
- FR-A1- 3 100 002
- JP-B2- 6 317 064
- KR-A- 20150 092 872
- KR-A- 20210 036 727
- GOUTON LUCILLE: "Formation par traitement de surface par laser d'une couche de chromine sur un alliage base nickel pour limiter le rel�chement des cations en circuit primaire", 9 November 2015 (2015-11-09), HAL open science, XP093129918, Retrieved from the Internet <URL:https://pastel.hal.science/tel-01310981/file/GOUTON.pdf> [retrieved on 20240211]

## Description

### Field of invention

The invention relates to a process for surface structuring of a metal workpiece, a process for producing a hybrid product from a metal workpiece and a polymer material, and a hybrid product produced by said process.

### Prior Art

Two traditional processes of joining metal and polymer by a form-locked joint on a macro level and by adhesive bonding are known from prior art.

In form-locking joining, negative shapes, i.e. recesses in the form of grooves, slots, holes, etc., are made in the metal material, and then a polymer is applied to the metal by injection moulding to fill the recesses in the metal. Once the polymer has cured, a form-locked joint is produced between the two materials. The form-locked joint is purely mechanical, with no chemical adhesion. The components produced by this technology often carry mechanical loads and are subjected to stress concentrations in the area of the root of the recesses, which means that the bearing surfaces of the positive shapes must be dimensioned accordingly, which generally means that the cross-sections of the positive shapes must be larger (greater wall thicknesses) and the consumption of material is greater than in the adhesive bonding process. A further disadvantage is that the geometry of the recesses has to be redesigned for each type of product. The technology used to provide the recesses in the metal material is complex and consequently expensive in terms of the manufacturing process of the metal part.

When using adhesive bonding in mass production, the surface of the metal part is usually first plasma-cleaned to remove impurities (e.g. oil) as well as the oxide layer. The surface may also be prepared chemically (etching), followed by the application of adhesive and joining of the metal and polymer, followed by air or oven drying to dry and chemically crosslink the adhesive. The disadvantage of this method of joining lies in ecological reasons, as the adhesives are classified as hazardous waste and the final product cannot be fully recycled. Another disadvantage is the strength of the joint, which is strongly dependent on the working conditions under which the product is operated. In particular, the strength is affected by fluctuations in temperature and humidity. The process is also energy inefficient. In addition, the adhesive bonding process is very time and space consuming, as the curing process to 100% mechanical strength of the joint takes from a few days up to 1 month. As a consequence, such products also require intermediate storage before further assembly steps are carried out.

More recently, processes have emerged in which a metal surface is treated with a laser and then a polymer is applied to the metal by injection moulding, providing a form-locked joint both at the micro and nano levels.

Document DE 102016215493 A1 discloses a process for joining a metal and a polymer element. The surface of the metal element comprises micro structured recesses which are produced by ultrashort pulsed laser illumination, i.e. laser pulse durations of 1 to 1000 picoseconds and/or 1 to 1000 femtoseconds. Here, recesses are formed in the surface of the metal element, which have a depth/diameter ratio greater than or equal 5. A disadvantage of the above solution is that the injection moulding of the polymer onto the metal entraps air in the recesses, which reduces the contact area between the metal and the polymer and therefore leads to poorer adhesion between the metal and the polymer. A further disadvantage is demonstrated when corrodible steel needs to be corrosion-protected after surface structuring, e.g. by electroplating. In electroplating, concentrations of electric currents occur at the bottom of the recesses, resulting in a markedly uneven thickness of the anti-corrosion coating. Another problem is the capillary effect, which causes a significant part of the structure to be filled with the anti-corrosion coating.

EP 3154764 B1 discloses a method for producing a plastic-metal hybrid component, where macroscopic undercuts with microscopic undercuts of random shapes are produced by short pulsed laser illumination to improve the adhesion of the metal to plastics. The process involves preheating the metal part before or during injection moulding. A disadvantage of the solution is that the preheating of the metal part requires a heating unit, i.e. additional equipment and an additional process step. Preheating is time and energy consuming. In addition, preheating can lead to local temperature peaks, especially in geometrically complex products, which can damage the material and reduce its load-bearing capacity and shape-related accuracy. Random microstructure can often lead to fully or partially closed recesses that trap air and cannot be filled by the injected plastic, which deteriorates the load-bearing capacity of the joint and increases the potential for corrosion. The depth of macrostructural depressions can be as little as 100 µm and as much as 1 mm, requiring longer processing times and higher energy consumption.

EP 2307187 B1 discloses a process for the production of a hybrid component, in which a surface roughness is provided on one part by electromagnetic radiation to provide a microstructure overlain by a nanostructure. The structure is provided by a laser with duration of pulses between 100 fs to 100 ps.

KR20210036727A relates to a heterogeneous material assembly and a manufacturing method using the same. More specifically, it relates to: a heterogeneous material assembly, in which a coating layer is formed on the surface of a metal layer, an etching groove is formed by irradiating a laser on the surface of the metal layer, and a resin layer containing an inorganic filler having a specific aspect ratio is bonded to improve adhesive strength; and a manufacturing method using the same.

EP3498416B1 discloses the preamble of claim 1

### Technical problem

The technical problem is how to provide a process for surface structuring of a metal element that will ensure good adhesion between the metal and the polymer and allow the thickness of the anti-corrosion coating to be as uniform as possible in the case of joining corrodible steel. It is further an object of the invention to provide a time and energy efficient process for surface structuring of various metal materials.

### Solution to the technical problem

The technical problem is solved by a process for surface structuring of a metal workpiece according to claim 1.

The advantage of the process for surface structuring of a metal element of the invention over known processes is in that the surface structure of a metal element ensures good adhesion between the metal and the polymer and allows the thickness of the anti-corrosion coating to be uniform in the case of joining corrosion-resistant steel. In addition, the process is time and energy efficient and suitable for a variety of metal materials.

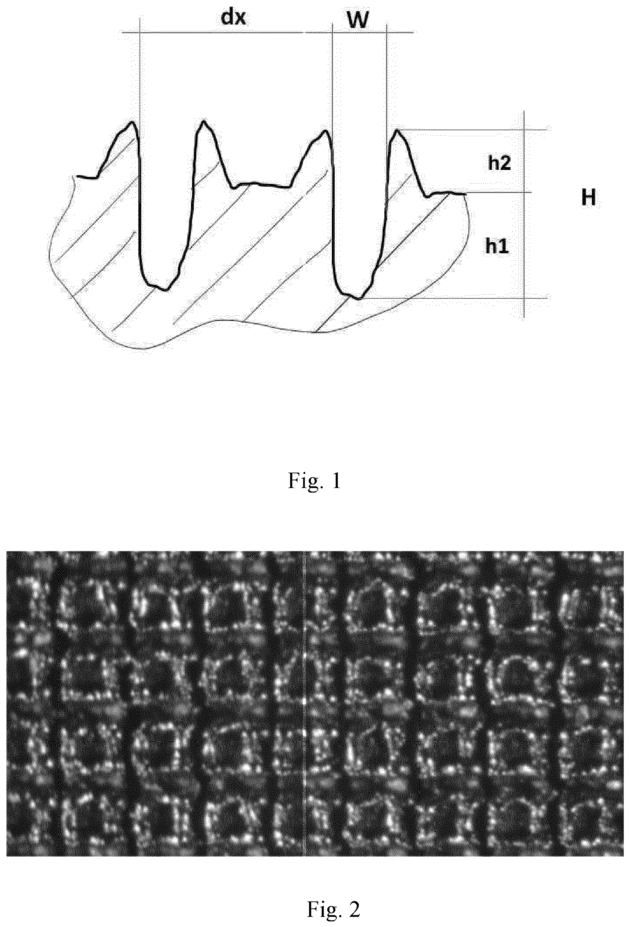

Figure 1: Schematic representation of a cross-section of a workpiece with a surface structured by the process according to the invention
Figure 2: Photograph of a workpiece surface structured by the process according to the invention, wherein the beam speed on the metal workpiece surface was 250 mm/s, a pulse rate was 112.5 kHz, a number of passes was 3, and spacing between adjacent passes was 140 µm

The invention is described in more detail hereinbelow.

The technical problem is solved by a process for surface structuring of a metal workpiece, comprising:
- providing a metal workpiece,
- providing a laser device comprising a pulsed laser source having a wavelength of 500 nm to 1100 nm, preferably 1000 nm to 1074 nm, and an average power of 250 W to 400 W, and a controller arranged to control the laser at a pulse rate of 800 kHz to 1500 kHz, and a pulse duration of 10 ns to 100 ns, preferably 40 ns to 60 ns,
- providing scanning-focusing optics for guiding and focusing the laser beam, adapted to guide the laser beam across the surface of the metal workpiece at a beam travel speed across the surface of the metal workpiece from 3000 mm/s to 5000 mm/s and to guide the laser beam along the same trajectory from 2 to 5 times, preferably 3 times and to focus the laser beam so that it has a diameter on the surface of the metal workpiece of 20 µm to 80 µm, preferably 35 µm to 45 µm.

This process results in the metal workpiece material illuminated by the laser beam being instantaneously vaporized due to the high energy concentration, which, in combination with the moving laser beam, leads to the formation of narrow grooves with a width W of 5 µm to 200 µm, preferably 15 µm to 90 µm, most preferably 30 µm to 40 µm and a depth h1 of 5 µm to 200 µm, preferably 15 µm to 50 µm, most preferably 30 µm to 40 µm. Furthermore, the above process achieves that a portion of the metal workpiece material illuminated by the laser beam is merely melted and the overpressure due to the aforementioned metal vapours pushes the melt along the walls of the groove to the outside, where the melt solidifies again. In this way, a needle is formed on each side of the groove, which rises above the base surface of the metal workpiece by a height h2, thereby further increasing the surface area of the metal workpiece, which allows better adhesion with the polymer material that can be injected moulded onto the metal workpiece. The process produces a needle height h2 of 5 µm to 100 µm, preferably 15 µm to 50 µm, most preferably 30 µm to 40 µm. The total depth H of the groove thus amounts to 10 µm to 300 µm, preferably 30 µm to 100 µm, most preferably 60 µm to 80 µm. Part of the metal vapours condenses on the needle surface, forming additional nanostructures after solidification, which increase the surface roughness and thus further contribute to better adhesion with the polymer material that can be injection moulded onto the metal workpiece.

It is understandable that a selection of parameters at the outer limits of these ranges gives poorer results, while a selection of parameters close to the preferred values gives the best results in terms of the desired surface structure of the workpiece. The causal relationships between the process parameter selections are explained below.

The broadest wavelength range envisaged (300 nm to 11000 nm) represents the spectrum used for laser processing of a wide variety of materials; from metals to plastics. However, the material chosen has a major impact on the absorbance of the laser light, and it is the absorbance of the light that has the greatest impact on the yield and accuracy of the process. High absorbance leads to high yield in the conversion of laser energy into heat and, ultimately, to its melting and evaporation. All of this also affects the depth of the microstructures produced, so that at lower absorbance, its random variation, for example due to variations in roughness or material composition, has a much greater impact on the final shape of the microstructure (depth and width of the grooves) than is the case at high absorbance. It is known that the absorbance of metals increases as the wavelength of the pulsed laser shortens; therefore the predicted wavelength range of the pulsed laser provides high absorbance of the laser light in the metal, resulting in high energy yield and good reproducibility. This means that for the intended wavelength range of the pulsed laser, the effects of local variations in the surface roughness of the workpiece and its material composition on the absorbance are small and consequently also on the achieved groove depth at constant laser power.

The average power of the pulsed laser has a direct impact on the machining times for surface structuring. In the case of lower power, the machining time increases and vice versa. In the case of pulsed laser power higher than about 1000 W, the power density on the optical components increases so much that overheating and process instability can occur. The intensity of the laser light in the machining area itself also increases beyond a threshold when ionisation of the surrounding atmosphere (plasma plume) occurs, which constitutes what we call a plasma shield that prevents the unhindered propagation of the laser light towards the machining surface. The laser light is partly absorbed by the plasma and partly scattered and defocused, resulting in the inability to produce microstructures.

The pulsed laser frequency combined with the average power affects the beam travel speed and consequently the machining time. Due to the production of a structure consisting of a plurality of grooves, it is important that the traces generated by successive laser pulses overlap each other (typically 50%). So, if we want to increase the beam travel speed, we also need to increase the pulse frequency. For pulsed laser frequency below 100 kHz, this means that to achieve overlap, the laser beam has to move at a low speed, which increases processing times and makes the process inefficient in terms of time. However, in the case of frequency higher than 4,000 kHz, the time interval between pulses is already so short that the material is no longer sufficiently cooled, so the process switches from a predominantly vaporizing to a remelting mode, which does not provide the desired surface structure of the workpiece.

If the selected number of passes of the laser beam along the same trajectory is lower, the laser beam has to be moved more slowly to achieve the same groove depth, so that it stays in the same place for a longer period of time. This results in a wider area of the irradiated material (from a few microns to a few 10 microns) being overheated and melted, which has extremely positive effects on the shape of the microstructure within a given range. The molten material is pushed outwards along the walls and resolidifies due to the overpressure created by the vaporisation of the material in the microgrooves. This leads to the emergence of negative angles and needle shapes, which have an extremely positive effect on shape locking (at the micro level). However, in the case of excessive melting of the surrounding material (with a further reduced beam speed), the grooves start to close automatically, leading to the loss of the basic function of the structure to be achieved. Also, the workpiece may start to overheat, which can lead to bending of the workpiece. Due to the above described phenomena, it is recommended to move the laser beam along the same trajectory from 1 to 10 times, preferably 2 to 5 times, most preferably 3 times.

When machining a metal workpiece, the laser beam is moved across the surface of the metal workpiece in two directions substantially perpendicular to each other to form a lattice structure with a period dx of 100 µm to 300 µm, preferably 130 to 150 µm. In the case of disc-shaped metal workpieces, it is preferable that the laser beam, when machining the metal workpiece, travels along the surface in tangential and radial directions so as to form a spider web-like structure with an average period dx of 100 µm to 300 µm, preferably 130 to 150 µm.

Tests have shown that the process is suitable for surface structuring of various metal materials such as stainless and corrodible steel, aluminium, copper, etc. The process has proven to be effective for materials of different compositions, e.g. metal materials suitable for punching or aluminium suitable for high-pressure die casting. The structure is also suitable for a subsequent electrochemical electroplating process and remains suitable for joining with a polymer material even after the application of anti-corrosion protection. The test was carried out with an 8.25 µm thick Zn-Ni anti-corrosion coating.

**The invention** further relates to a process for producing a hybrid product from a metal workpiece and a polymer material, comprising the following:
- process steps for surface structuring of a metal workpiece,
- providing an injection moulding tool,
- inserting the metal workpiece into the injection moulding tool and closing the mould,
- injecting the polymer material melt into the tool, where the melt temperature is between 200°C and 400°C, depending on the type of polymer material,
- cooling and curing of the polymer material in the tool; and
- removing the hybrid product from the tool.

The polymer material melt has low viscosity, which, at high injection pressure of the polymer material (≥ 200 bar), allows the melt to fill perfectly all the gaps of the prepared microstructure in the surface of the metal material.

## Claims

1. A process for surface structuring of a metal workpiece, comprising:
- providing a metal workpiece,
- providing a laser device comprising a pulsed laser source having a wavelength of 500 nm to 1100 nm, preferably 1000 nm to 1074 nm, and a controller arranged to control the laser at a pulse rate,
- providing scanning-focusing optics for guiding and focusing the laser beam, adapted to guide the laser beam across the surface of the metal workpiece and to focus the laser so that it has a diameter on the surface of the metal workpiece of 20 µm to 80 µm, preferably 35 µm to 45 µm,
**characterized in that**,
an average power of the laser is 250 W to 400 W,
the pulse rate is 800 kHz to 1500 kHz, a pulse duration is 10 ns to 100 ns, preferably 40 ns to 60 ns and the beam travel speed across the surface of the metal workpiece is 3000 mm/s to 5000 mm/s. and guiding the laser beam along the same trajectory from 2 to 5 times, preferably 3 times.

2. The process according to claim 1, **characterized in that** during the metal workpiece machining the laser beam is moved across the surface of the metal workpiece in two directions substantially perpendicular to each other to form a lattice structure with a period dx of 100 µm to 300 µm, preferably 130 to 150 µm.

3. The process according to claim 1, **characterized in that** in the machining of disc-shaped metal workpieces the laser beam, when machining the metal workpiece, travels along its surface in tangential and radial directions so as to form a spider web-like structure with an average period dx of 100 µm to 300 µm, preferably 130 to 150 µm.

4. The process according to any of the previous claims, **characterized in that** the metal workpiece is made of steel or aluminium.

5. The process for producing a hybrid product from a metal workpiece and a polymer material, **characterized by** comprising:
- a process for surface structuring of a metal workpiece according to any of the previous claims,
- providing an injection moulding tool,
- inserting the metal workpiece into the injection moulding tool and closing the mould,
- injecting the polymer material melt into the tool, where the melt temperature is between 200°C and 400°C, depending on the type of polymer material,
- cooling and curing of the polymer material in the tool; and
- removing the hybrid product from the tool.

## Patentansprüche

1. Verfahren zur Oberflächenstrukturierung eines Metallwerkstücks, umfassend:
- Bereitstellen eines Metallwerkstücks,
- Bereitstellen einer Laservorrichtung, die eine gepulste Laserquelle mit einer Wellenlänge von 500 nm bis 1100 nm, vorzugsweise 1000 nm bis 1074 nm, und eine Steuerung umfasst, die dazu vorgesehen ist, den Laser mit einer Pulsrate zu steuern,
- Bereitstellen einer Abtastfokussierungsoptik zum Führen und Fokussieren des Laserstrahls, die dazu eingerichtet ist, den Laserstrahl über die Oberfläche des Metallwerkstücks zu führen und den Laser so zu fokussieren, dass er einen Durchmesser auf der Oberfläche des Metallwerkstücks von 20 µm bis 80 µm, vorzugsweise 35 µm bis 45 µm aufweist;
**dadurch gekennzeichnet, dass**
eine durchschnittliche Leistung des Lasers 250 W bis 400 W beträgt,
die Pulsrate 800 kHz bis 1500 kHz beträgt,
eine Pulsdauer 10 ns bis 100 ns, vorzugsweise 40 ns bis 60 ns beträgt, und die Strahlvorschubgeschwindigkeit über die Oberfläche des Metallwerkstücks 3000 mm/s bis 5000 mm/s beträgt, und der Laserstrahl von 2 bis 5 mal, vorzugsweise 3 mal, entlang derselben Trajektorie geführt wird.

2. Verfahren nach Anspruch 1, **dadurch gekennzeichnet, dass** der Laserstrahl während der Bearbeitung des Metallwerkstücks in zwei zueinander im Wesentlichen rechtwinkligen Richtungen über die Oberfläche des Metallwerkstücks bewegt wird, um eine Gitterstruktur mit einer Periode dx von 100 µm bis 300 µm, vorzugsweise 130 bis 150 µm, zu bilden.

3. Verfahren nach Anspruch 1, **dadurch gekennzeichnet, dass** bei der Bearbeitung scheibenförmiger Metallwerkstücke der Laserstrahl bei der Bearbeitung des Metallwerkstücks in tangentialer und radialer Richtung entlang seiner Oberfläche bewegt wird, um eine spinnennetzartigen Struktur mit einer mittleren Periode dx von 100 µm bis 300 µm, vorzugsweise 130 bis 150 µm zu bilden.

4. Verfahren nach einem der vorhergehenden Ansprüche, **dadurch gekennzeichnet, dass** das Metallwerkstück aus Stahl oder Aluminium gefertigt ist.

5. Verfahren zur Herstellung eines Hybridprodukts aus einem Metallwerkstück und einem Polymermaterial, **dadurch gekennzeichnet, dass** es Folgendes umfasst:
- ein Verfahren zur Oberflächenstrukturierung eines Metallwerkstücks nach einem der vorhergehenden Ansprüche,
- Bereitstellen eines Spritzgusswerkzeugs,
- Einlegen des Metallwerkstücks in das Spritzgusswerkzeug und Schließen des Formwerkzeugs,
- Einspritzen der Polymermaterialschmelze in das Werkzeug, wobei die Schmelztemperatur je nach Art des Polymermaterials zwischen 200 °C und 400 °C liegt;
- Abkühlen und Aushärten des Polymermaterials in dem Werkzeug; und
- Entfernen des Hybridprodukts aus dem Werkzeug.

## Revendications

1. Procédé de structuration de surface d'une pièce de fabrication métallique, comprenant :
- l'obtention d'une pièce de fabrication métallique,
- l'obtention d'un dispositif laser comprenant une source laser pulsée ayant une longueur d'onde de 500 nm à 1100 nm, de préférence 1000 nm à 1074 nm, et d'un dispositif de commande conçu pour commander le laser à une fréquence d'impulsion,
- l'obtention d'une optique de balayage-focalisation servant à guider et focaliser le faisceau laser, adaptée pour guider le faisceau laser sur la surface de la pièce de fabrication métallique et pour focaliser le laser de telle sorte qu'il possède un diamètre sur la surface de la pièce de fabrication métallique de 20 µm à 80 µm, de préférence 35 µm à 45 µm,
**caractérisé en ce que**
une puissance moyenne du laser est de 250 W à 400 W,
la fréquence d'impulsion est de 800 kHz à 1500 kHz,
la durée d'une impulsion est de 10 ns à 100 ns, de préférence 40 ns à 60 ns, et la vitesse de déplacement du faisceau sur la surface de la pièce de fabrication métallique est de 3000 mm/s à 5000 mm/s, et le faisceau laser est guidé le long de la même trajectoire 2 à 5 fois, de préférence 3 fois.

2. Procédé selon la revendication 1, **caractérisé en ce que**, pendant l'usinage de la pièce de fabrication métallique, le faisceau laser est déplacé sur la surface de la pièce de fabrication métallique dans deux directions sensiblement perpendiculaires l'une à l'autre pour former une structure de réseau avec une période dx de 100 µm à 300 µm, de préférence 130 à 150 µm.

3. Procédé selon la revendication 1, **caractérisé en ce que**, dans l'usinage de pièces de fabrication métalliques en forme de disque, le faisceau laser, lors de l'usinage de la pièce de fabrication métallique, se déplace le long de sa surface dans des directions tangentielle et radiale de manière à former une structure en forme de toile d'araignée avec une période moyenne dx de 100 µm à 300 µm, de préférence 130 à 150 µm.

4. Procédé selon l'une quelconque des revendications précédentes, **caractérisé en ce que** la pièce de fabrication métallique est constituée d'acier ou d'aluminium.

5. Procédé destiné à fabriquer un produit hybride à partir d'une pièce de fabrication métallique et d'un matériau polymère, **caractérisé en ce qu'**il comprend :
- un procédé de structuration de surface d'une pièce de fabrication métallique selon l'une quelconque des revendications précédentes,
- l'obtention d'un outil de moulage par injection,
- l'insertion de la pièce de fabrication métallique dans l'outil de moulage par injection et la fermeture du moule,
- l'injection de la masse fondue de matériau polymère dans l'outil, la température de fusion étant comprise entre 200 °C et 400 °C, selon le type de matériau polymère,
- le refroidissement et le durcissement du matériau polymère dans l'outil ; et
- le retrait du produit hybride de l'outil.
